# EUROPEAN PATENT APPLICATION

(11) **EP 4 254 430 A1**
(43) Date of publication of application: **04.10.2023**
(21) Application number: 21898460.7
(22) Date of filing: 15.11.2021
(51) Int. Cl.: G21D 3/06, G06N 3/08, G06N 3/04, G06Q 50/06, G21C 17/00

(54) **DEVICE AND METHOD FOR TRACKING BASIS OF ABNORMAL STATE DETERMINATION BY USING NEURAL NETWORK MODEL**

(30) Priority: 25.11.2020 KR 20200160251
(71) Applicant: Korea Hydro & Nuclear Power Co., Ltd, Gyeongju-si, Gyeongsangbuk-do 38120 (KR)
(72) Inventor: KIM, Yun Goo, Daejeon 34094 (KR); SEONG, No Kyu, Sejong 30150 (KR); PARK, Dae Seung, Daejeon 34101 (KR)
(74) Representative: Habermann, Hruschka & Schnabel
(86) International application number: PCT/KR2021/016627
(87) International publication number: WO 2022/114634

(57) **Abstract**

The present invention relates to a device for tracking the basis of an abnormal state determination by using a neural network model, comprising: an abnormality type classification unit for classifying an abnormal state into a plurality of failures in an abnormal operation scenario in which a plurality of scenarios related to the abnormal state are stored; an operation variable deriving unit for deriving operation variables affecting an abnormal state determination result for each of the plurality of classified failures; a power plant operation variable weighting unit for weighting the variable related to the abnormal state from among the operation variables; and an abnormal state determination basis generation unit for tracking the basis of an abnormal state determination from the abnormal state determination result generated through the weighted power plant operation variable.

## Description

### BACKGROUND

### Field

The research related to this patent was made with the support of the Nuclear Core Technology Development Project (Project Title: Artificial intelligence-based nuclear power plant start-up and shutdown operation resource technology development, Project Number: 1415159084) under the supervision of the Ministry of Trade, Industry and Energy.

The present disclosure relates to a device and method for tracking a basis of an abnormal status diagnosis and, more particularly, to a device and method for diagnosing an abnormal status using a neural network model and tracking the diagnosis basis.

### Related Art

Various abnormal operation statuses exist in a nuclear power plant. When the abnormal operation status occurs, an alarm is generated in a main control room, and the related status of the power plant changes. Changes in status of the power plant include temperature, pressure, flow rate, etc.

An operator diagnoses what kind of abnormal operation status has occurred on the basis of the alarm of the power plant, and takes appropriate measures according to the procedure for the abnormal operation status.

However, since there are hundreds of abnormal operation statuses in the nuclear power plant, and it is difficult for an inexperienced operator to accurately diagnose the abnormal status, measures on the abnormal status may not be properly taken.

Therefore, research is being conducted on a method for diagnosing an abnormal status of a nuclear power plant by learning operation data of the abnormal status using a neural network model so that an operator can promptly diagnose the abnormal status due to the failure of a device or facility and then can take appropriate measures. However, it is difficult for the neural network model to track which changes in operation data of the power plant are the basis for diagnosing the abnormal status.

### [Documents of Related Art]

### [Patent Document]

(Patent Document 1) Korean Patent 2095653 (Device and method for diagnosing abnormal operation status using neural network model, KHNP CO., LTD.)
(Patent Document 2) U.S. Patent 10452845 (Generic framework to detect cyber threats in electric power grid , GENERAL ELECTRIC COMPANY)
(Patent Document 2) U.S. Patent 20190164057 (Mapping and quantification of influence of neural network features for explainable artificial intelligence, INTEL CORP)

### SUMMARY

Accordingly, the present disclosure has been made keeping in mind the above problems occurring in the related art, and an objective of the present disclosure provides a method for estimating an operating variable that is a basis for diagnosing an abnormal status of a nuclear power plant using a neural network model and a device for tracking a basis of an abnormal status diagnosis using the neural network model.

In an aspect, a device for tracking a basis of an abnormal status diagnosis using a neural network model includes an abnormal classification unit for classifying the abnormal status into a plurality of failures in an abnormal scenario in which a plurality of scenarios related to the abnormal status are stored, an operating variables deriving unit for deriving operating variables affecting an abnormal status diagnosis result for each of the plurality of classified failures, a power plant operating variables weighting unit for providing a weight to the variables related to the abnormal status from among the operating variables, and an abnormal status diagnosis basis generating unit for tracking the basis of an abnormal status diagnosis from the abnormal status diagnosis result generated through the weighted power plant operating variables.

Further, the power plant operating variables weighting unit for providing the weight to the variables related to the abnormal status from among the operating variables provides the weight to physical variables that are classified in consideration of physical correlation of a power plant system related to the abnormal status and are related to the abnormal status.

Further, the abnormal classification unit classifies the abnormal scenario to include at least one of valve leakage, pump failure, heat exchanger failure, and coolant leakage.

Further, the operating variables deriving unit for deriving the operating variables affecting the abnormal status diagnosis result for each of the plurality of classified failures includes deriving of a flow rate of the power plant system related to a corresponding valve when the failure is classified as valve leakage, a flow rate and a pressure of the power plant system related to a corresponding pump when the failure is classified as pump failure, a temperature of the power plant system related to a corresponding heat exchanger when the failure is classified as heat exchanger failure, and a leakage area radiation level when the failure is classified as coolant leakage.

Further, the physical variables related to the abnormal status are written with reference to an abnormal procedure or an actual power plant operation history.

Further, the abnormal status diagnosis basis is the operating variables that can be distinguished from a different abnormal status, and is used for validation of abnormal status diagnosis logic used in an abnormal status diagnosis system.

Further, the abnormal status diagnosis basis is used to validate diagnosis logic described in the abnormal procedure, and the abnormal procedure describes the operating variables that vary when the abnormal status occurs.

In addition, a method for generating a basis of an abnormal status diagnosis using a neural network model includes generating an abnormal status diagnosis result at a final stage of the neural network model by learning power plant operation data and the neural network model, and extracting variable values that affect the abnormal status diagnosis result by performing an impact analysis for the abnormal status diagnosis result on a fully connected layer before generating the abnormal status diagnosis result.

Further, the extracting the variable values that affect the abnormal status diagnosis result includes virtually generating visualized input change data by applying visualization algorithm, analyzing an impact of the input change data on a change in the abnormal status diagnosis result through calculation of the neural network model with the virtual input change data as an input, and extracting the input change data that contributes most to deriving the change in the abnormal status diagnosis result.

### ADVANTAGEOUS EFFECTS

A device and method for tracking a basis of an abnormal status diagnosis using a neural network model according to embodiments of the present disclosure can accurately diagnose the type of the abnormal status in a short time and provide the type to an operator when various types of abnormal statuses occur, so that it is possible to rapidly and accurately respond to the abnormal status of a nuclear power plant, thereby improving the safety of the nuclear power plant.

### BRIEF DESCRIPTION OF THE DRAWINGS

FIG. 1 is a diagram schematically illustrating an existing abnormal status diagnosis device using a neural network model.
FIG. 2 is a diagram schematically illustrating the operation process of a device for tracking a basis of an abnormal status diagnosis using a neural network model according to an embodiment of the present disclosure.
FIG. 3 is a diagram schematically illustrating the operation process of extracting operating variables that affect a change in an abnormal status diagnosis result using the neural network model according to an embodiment of the present disclosure.
FIG. 4 is a diagram illustrating the operation process of generating an abnormal status diagnosis basis according to an embodiment of the present disclosure.
FIG. 5 is a schematic block diagram illustrating the configuration of a device for extracting a basis of an abnormal status diagnosis according to an embodiment of the present disclosure.
FIG. 6 is a diagram illustrating the use of the abnormal status diagnosis basis derived by applying the neural network model according to an embodiment of the present disclosure.

### [Detailed Description of Main Elements]

100: abnormal operation status diagnosis device
200, 500: device for tracking basis of abnormal status diagnosis
210: power plant operation data
230: neural network
510, 600: abnormal scenario
520: abnormal classification unit
530: operating variables deriving unit
540: power plant operating variables weighting unit
550: abnormal status diagnosis basis generating unit

### Best mode

Hereinafter, a preferred embodiment of the present disclosure will be described with reference to the accompanying drawings. Some components irrelevant to the gist of the present disclosure will be omitted or compressed, but the omitted components are not unnecessary components in the present disclosure, and may be combined and used by those skilled in the art.

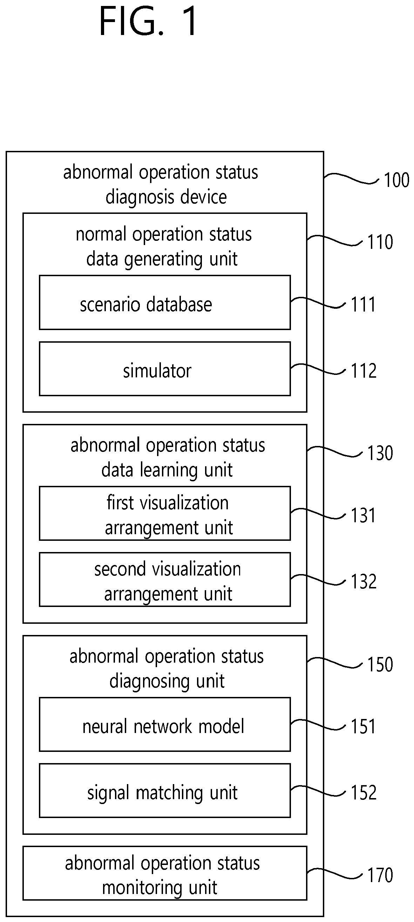

FIG. 1 is a diagram schematically illustrating an existing abnormal status diagnosis device using a neural network model.

As shown in FIG. 1, the abnormal operation status diagnosis device 100 using the neural network model may include an abnormal operation status data generating unit 110, an abnormal operation status data learning unit 130, an abnormal operation status diagnosing unit 150, and an abnormal operation status monitoring unit 170.

The abnormal operation status data generating unit 110 is a component that virtually generates abnormal operation status data on the basis of information on the abnormal operation status, and may include a scenario database 111 and a simulator 112.

The scenario database 111 is configured to include a plurality of scenarios related to abnormal operation status. These scenarios include a scenario based on operating variables related to temperature changes of nuclear power plant devices, a scenario based on operating variables related to turbine bearing vibration, and the like, and scenarios related to various abnormal operation statuses are stored in the scenario database 111. Here, the operating variables are operating factors for the operating statuses of the nuclear power plant devices, and about 1,000 to 2,000 operating variables may be included for each device. These operating variables may include pressure, temperature, flow rate, etc.

The simulator 112 is configured to simulate an abnormal operation status with respect to a scenario selected from among scenarios related to abnormal operation statuses stored in the scenario database 111. Thus, data on the abnormal operation status may be virtually generated.

The abnormal operation status data learning unit 130 is configured to visualize and learn the abnormal operation status, by applying the visualization algorithm on the basis of the abnormal operation status data generated in the abnormal operation status data generating unit 110. The abnormal operation status data learning unit 130 may include a first visualization arrangement unit 131 and a second visualization arrangement unit 132.

The first visualization arrangement unit 131 is configured to arrange devices provided in the nuclear power plant on the basis of physical locations of the operating variables. That is, the operating variables may be arranged in the same arrangement as the structure of an actual nuclear power plant.

The second visualization arrangement unit 132 is configured to preferentially arrange physically identical operating variables. For example, the operating variables related to temperature are arranged in the same zone to show the characteristics of each event when a change in temperature occurs.

The abnormal operation status diagnosing unit 150 is configured to learn the abnormal operation status on the basis of the operating variables indicated by the abnormal operation status data learning unit 130 applying the visualization algorithm, and to diagnose whether the abnormal operation status has occurred on the basis of the operating variables of devices acquired by a process monitoring and warning system of the nuclear power plant. Such an abnormal operation status diagnosing unit 150 may include a neural network model 151 and a signal matching unit 152.

The neural network model 151 is configured to learn the abnormal operation status data visualized by the first visualization arrangement unit 131 and the second visualization arrangement unit 132 on the basis of the visualization algorithm.

The signal matching unit 152 is configured to transmit information on a monitoring signal including information on the abnormal operation status to a corresponding device.

The abnormal operation status monitoring unit 170 is configured to monitor whether the operating status of each device provided in the nuclear power plant is within a normal range. Such an abnormal operation status monitoring unit 170 may periodically acquire a monitoring signal including information about operating variables of each device and transmit the monitoring signal to the abnormal operation status diagnosing unit 150.

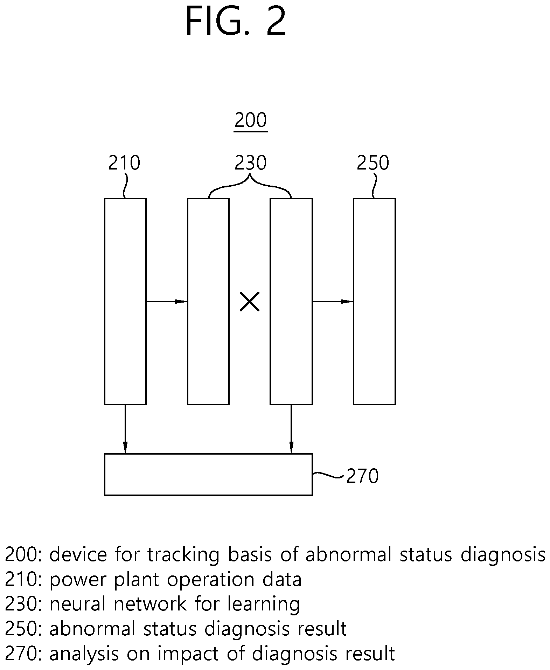

FIG. 2 is a diagram schematically illustrating the operation process of a device for tracking a basis of an abnormal status diagnosis using a neural network model according to an embodiment of the present disclosure.

As shown in FIG. 2, the abnormal status diagnosis basis tracking device 200 performs learning using the power plant operation data 210 and the neural network model 230 to generate the abnormal status diagnosis result 250. The neural network model 230 is calculated through multiple layers of neural networks (Deep Learning) so as to effectively learn each abnormal status. At the final stage of the neural network model 230, the abnormal status diagnosis result 250 is generated. According to the present disclosure, by performing an impact analysis 270 on the abnormal status diagnosis result 250 in the fully connected layer before generating the abnormal status diagnosis result 250, variable values affecting the abnormal status diagnosis result 250 are extracted.

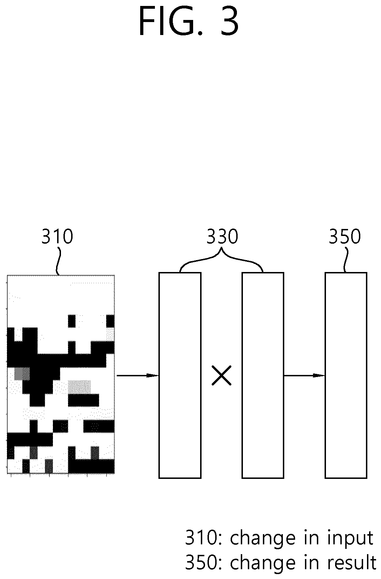

FIG. 3 is a diagram schematically illustrating the operation process of extracting operating variables that affect a change in an abnormal status diagnosis result using the neural network model according to an embodiment of the present disclosure.

As shown in FIG. 3, according to the present disclosure, first, visualized input change data 310 is virtually generated by applying the visualization algorithm. By analyzing the impact of the input change data 310 of each item on a result change 350 through the calculation of the neural network model 330 with the virtual input change data 310 as an input, the input change data 310 that contributes most to deriving the result change 350 is extracted.

Therefore, the visualization algorithm is advantageous to extract corresponding characteristics during pre-processing convolution and pooling of the neural network model 330 as operating variables at a location where an actual event such as a pipe break occurs are gathered and arranged.

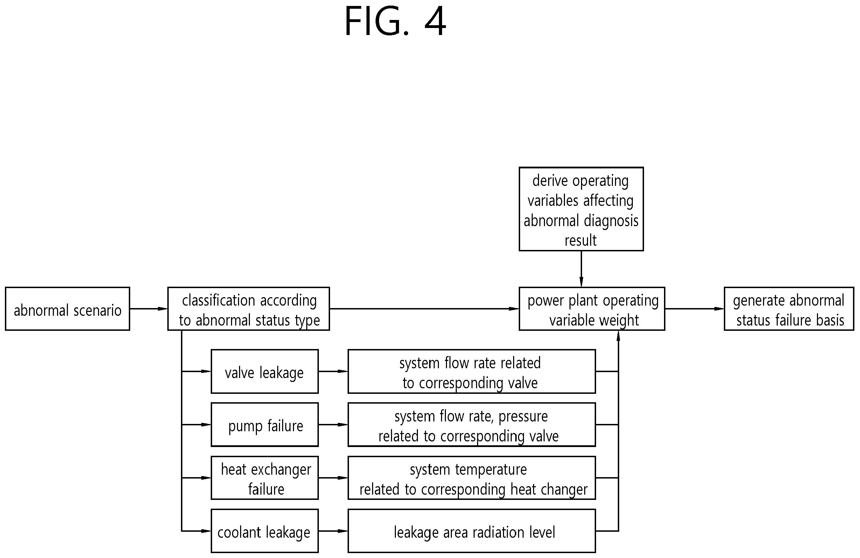

FIG. 4 is a diagram illustrating the operation process of generating an abnormal status diagnosis basis according to an embodiment of the present disclosure.

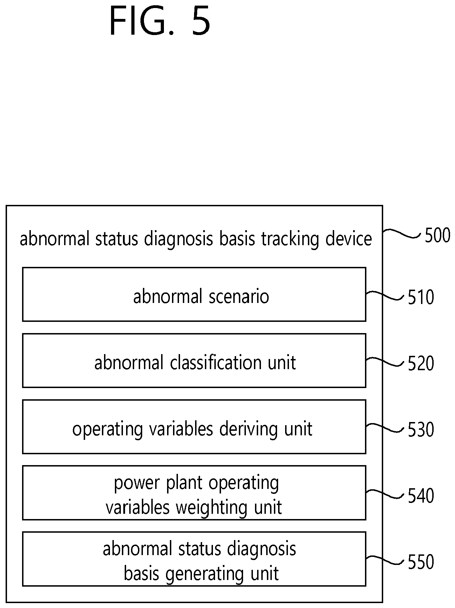

FIG. 5 is a schematic block diagram illustrating the configuration of a device for extracting a basis of an abnormal status diagnosis according to an embodiment of the present disclosure.

As shown in FIGS. 4 and 5, the abnormal status diagnosis basis tracking device 500 may include an abnormal scenario 510, an abnormal classification unit 520, an operating variables deriving unit 530, a power plant operating variables weighting unit 540, and an abnormal status diagnosis basis generating unit 550.

The abnormal scenario 500 is provided with a plurality of scenarios related to abnormal operation statuses. These scenarios include a scenario based on operating variables related to temperature changes of nuclear power plant devices, and a scenario based on operating variables related to turbine bearing vibration. The abnormal classification unit 520 classifies the abnormal scenario 500 into valve leakage, pump failure, heat exchanger failure, coolant leakage, etc. For the classified failure, the operating variables deriving unit 530 derives the operating variables that affect the abnormal diagnosis result. According to an embodiment, the flow rate of the power plant system related to a corresponding valve is derived in the case of the valve leakage, the flow rate and pressure of the power plant system related to a corresponding valve are derived in the case of the pump failure, the temperature of the power plant system related to a corresponding heat exchanger is derived in the case of the heat exchanger failure, and the leakage area radiation level is derived in the case of the coolant leakage. The input range affecting the abnormal status result includes a plurality of uncertainties. In order to extract the basis of the abnormal status diagnosis result, it is important to change the input physically related to the corresponding abnormal status.

Therefore, the operating variables of the basis for diagnosing the extracted abnormal status are used as the basis for diagnosing the neural network in consideration of the physical correlation of the related power plant system. The abnormal status is physically classified on the basis of information about the abnormal status, and a weight is provided to the physical variable related to each corresponding abnormal status.

In an embodiment, the abnormal status is classified as the valve leakage, and a high weight is provided to the flow rate of the power plant system that is thermal-hydraulically related to the corresponding power plant system and used to explain the basis of the abnormal status diagnosis. The operating variables physically related to the abnormal status are selected with reference to the abnormal procedure or the actual power plant operation history.

The power plant operating variables weighting unit 540 provides a weight to the physical variable related to the abnormal status among the operating variables for each failure. Finally, the abnormal status diagnosis basis generating unit 550 may more accurately track the basis through the result in which the weight is reflected.

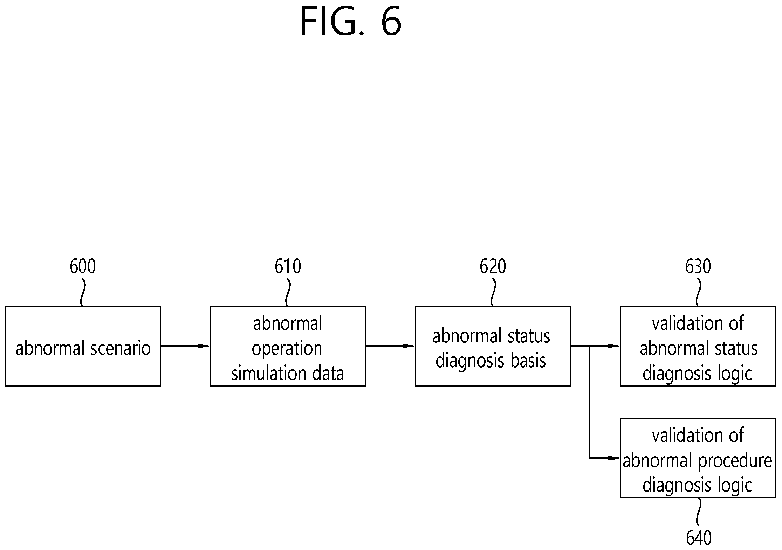

FIG. 6 is a diagram illustrating the use of the abnormal status diagnosis basis derived by applying the neural network model according to an embodiment of the present disclosure.

As shown in FIG. 6, an abnormal status diagnosis basis 620, derived from abnormal operation simulation data 610 simulated for a scenario selected from among the abnormal scenarios 600 in which a plurality of scenarios related to the abnormal status are provided, is a power plant operating variable that may distinguish the corresponding abnormal status from other abnormal statuses. This may be used for the validation 630 of abnormal status diagnosis logic that is being used in an abnormal status diagnosis system. That is, it can be confirmed whether the abnormal status diagnosis logic is developed by utilizing the operating variables that are changed due to the abnormal status.

Further, the abnormal procedure describes the operating variables that vary when the corresponding abnormal status occurs. The diagnosis logic of the abnormal procedure may be validated through abnormal procedure diagnosis logic validation 640 using the abnormal status diagnosis basis 620, and may be validate and revise the procedure so that an operator can more effectively diagnose the abnormal status.

## Claims

1. A device for tracking a basis of an abnormal status diagnosis using a neural network model, the device comprising:
an abnormal classification unit for classifying the abnormal status into a plurality of failures in an abnormal scenario in which a plurality of scenarios related to the abnormal status are stored;
an operating variables deriving unit for deriving operating variables affecting an abnormal status diagnosis result for each of the plurality of classified failures;
a power plant operating variables weighting unit for providing a weight to the variables related to the abnormal status from among the operating variables; and
an abnormal status diagnosis basis generating unit for tracking the basis of an abnormal status diagnosis from the abnormal status diagnosis result generated through the weighted power plant operating variables.

2. The device of claim 1, wherein the power plant operating variables weighting unit for providing the weight to the variables related to the abnormal status from among the operating variables provides the weight to physical variables that are classified in consideration of physical correlation of a power plant system related to the abnormal status and are related to the abnormal status.

3. The device of claim 1, wherein the abnormal classification unit classifies the abnormal scenario to include at least one of valve leakage, pump failure, heat exchanger failure, and coolant leakage.

4. The device of claim 1, wherein the operating variables deriving unit for deriving the operating variables affecting the abnormal status diagnosis result for each of the plurality of classified failures comprises deriving of a flow rate of the power plant system related to a corresponding valve when the failure is classified as the valve leakage, a flow rate and a pressure of the power plant system related to a corresponding valve when the failure is classified as the pump failure, a temperature of the power plant system related to a corresponding heat exchanger when the failure is classified as the heat exchanger failure, and a leakage area radiation level when the failure is classified as the coolant leakage.

5. The device of claim 1, wherein the physical variables related to the abnormal status are written with reference to an abnormal procedure or an actual power plant operation history.

6. The device of claim 1, wherein the abnormal status diagnosis basis is the operating variables that can be distinguished from a different abnormal status, and is used for validation of abnormal status diagnosis logic used in an abnormal status diagnosis system.

7. The device of claim 1, wherein the abnormal status diagnosis basis is used to validate diagnosis logic described in the abnormal procedure, and the abnormal procedure describes the operating variables that vary when the abnormal status occurs.

8. A method for generating a basis of an abnormal status diagnosis using a neural network model, the method comprising:
generating an abnormal status diagnosis result at a final stage of the neural network model by learning power plant operation data and the neural network model; and
extracting variable values that affect the abnormal status diagnosis result by performing an impact analysis for the abnormal status diagnosis result on a fully connected layer before generating the abnormal status diagnosis result.

9. The method of claim 8, wherein the extracting the variable values that affect the abnormal status diagnosis result comprises virtually generating visualized input change data by applying visualization algorithm, analyzing an impact of the input change data on a change in the abnormal status diagnosis result through calculation of the neural network model with the virtual input change data as an input, and extracting the input change data that contributes most to deriving the change in the abnormal status diagnosis result.
